# EUROPEAN PATENT SPECIFICATION

(11) **EP 1 110 332 B1**
(45) Date of publication and mention of the grant of the patent: **24.03.2004**
(21) Application number: 99944501.8
(22) Date of filing: 24.08.1999
(51) Int. Cl.: H04B 3/23

(54) **SCALED IMPEDANCE REPLICA FOR ECHO ATTENUATION IN DIGITAL TRANSMISSION SYSTEMS**
SKALIERTE IMPEDANZREPLIKA FÜR ECHO-DÄMPFUNG IN DIGITALEN ÜBERTRAGUNGSSYSTEMEN
REPLIQUE D'IMPEDANCE ETALONNEE POUR AFFAIBLISSEMENT D'ECHO DANS DES SYSTEMES DE TRANSMISSION NUMERIQUE

(30) Priority: 31.08.1998 US 144820
(43) Date of publication of application: 27.06.2001
(73) Proprietor: Infineon Technologies AG, 81669 München (DE); Adtran Inc., Huntsville, Al 35814-4000 (US)
(72) Inventor: BLON, Thomas, D-86860 Jengen (DE); GRÖPL, Martin, D-81541 München (DE); MOYAL, Michael, D-81735 München (DE); JOFFE, Daniel, M., Huntsville, AL 35806-2907 (US)
(74) Representative: Reinhard - Skuhra - Weise & Partner
(86) International application number: PCT/EP1999/006210
(87) International publication number: WO 2000/013335

(56) References cited:
- EP-A- 0 346 874
- EP-A- 0 503 528
- EP-A- 0 693 846

## Description

The present invention relates to a device for echo cancellation according to the preamble of claim 1 as known from EP 0 693 846 A2.

### BACKGROUND OF THE INVENTION

In semiconductor based digital transmission systems like ISDN or XDSL, transmit and receive signals are being carried on the same pair of wire from location A to B. As long as no special precautions have been made the received signal, in the following named far end signal, is overlaid by the signal of the own transmitter, called echo. This has two disadvantages:
a) The receive path input has to be designed for high input levels. Therefore the possible signal to noise ratio (S/N) is limited.
b) In conventional ISDN and XDSL transmission systems you can find digital linear echo compensators after the analog receive path. This echo compensator is not able to subtract nonlinear distortion components from the echo. Thus the signal to distortion ratio (S/D) has to be kept very low.

To overcome the above mentioned problems a scaled impedance replica of the transmission path consisting of resistors, capacitors and inductors has been provided outside a transmission/receiver chip. The impedance replica delivers a signal which is nearly identical to the echo of the real tx-path. Since the signal of the real transmission line contains the echo plus the far end signal, the far end signal can be isolated by subtracting the replica signal from the signal on the real transmission line (=echo attenuation). An important prerequisite for high echo attenuation is to provide an exact impedance replica. Since different loops are used to set up a transmission channel a possibility has to be provided to trim the impedance replica. This would always need a few pins at the semiconductor chip to hook in or hook out some of the passive components in the replica network. The increased pin count is one major disadvantage beside the necessity of external passive components attached to the chip. Up to now the external impedance replica is a compromise solution which provides reasonable echo attenuation only at a few test loops.

### SUMMARY OF THE INVENTION

It is therefore an object of the present invention to provide a method and a device which can provide reasonable echo attenuation

This object is attained by means of the features in the independent claims. Preferred embodiments are subject of the dependent claims.

The chip of claim 1 comprises a bridged tap replica. The bridged tap replica is connected in parallel between the replica tip and ring lines. Further the bridged tap replica comprises an inductance, a capacitance and a resistance connected in series, wherein preferably the inductance, the capacitance as well as the resistance are adjustable.

preferably the transformer replica comprises a primary winding resistance replica, a secondary winding resistance replica, a transformer main inductance replica and a transformer stray inductance replica, wherein the transformer main inductance replica is preferably variable. Further the transformer main inductance replica is connected in parallel between the replica tap and ring lines whereas the primary winding resistance replica, the secondary winding resistance replica, and the transformer stray inductance replica are serial components of the replica loop.

Further the invention resides in a digital transmission system as defined in claim 8, wherein the signal of the transmission loop and the signal of the replica loop are fed into a subtractor of the receiver/transmitter device to remove the echo signal. The pure echo signal is established by connecting the device for echo attenuation, i.e. the replica loop, to the tip and ring terminals of the receiver/transmitter device in front of the terminating resistors.

According to the invention, the transformer replica is an on chip component of the receiver/transmitter chip. Further the bridged tap replica is an on chip component of the receiver/transmitter chip. Thus the values of the components of the bridged tap replica and the main transformer inductance replica, which are adjustable, can be set by programming the receiver/transmitter chip.

Further it is possible to integrate the terminating resistor replica and the transmission line replica on the receiver/transmitter chip.

### BRIEF DESCRIPTION OF THE DRAWINGS

A preferred embodiment of the invention is described below with reference to the accompanying drawing. The drawing show:

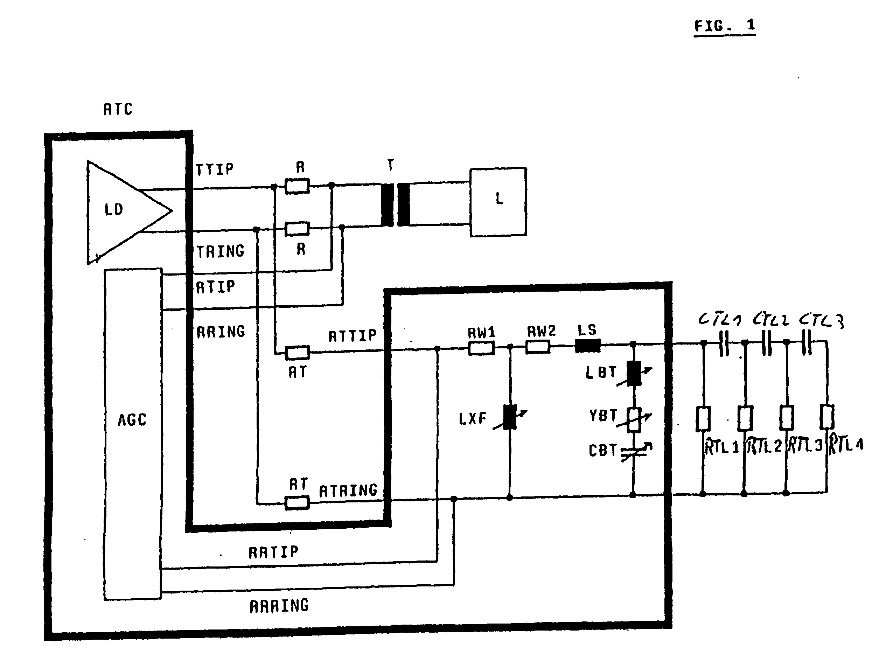

Fig. 1 A schematic circuit diagram of the receiver/transmitter chip comprising the device for echo attenuation.

### DETAILED DESCRIPTION OF THE INVENTION

The receiver/transmitter chip (surrounded by the bold line) comprises a line driver LD for driving the tip and ring signal lines TTIP and TRING. The digital transmission system comprises the terminating resistor R and R, a transformer T, and a loop L. Signals are sent to the loop L via the tip and ring signal lines TTIP and TRING. A signal received from the loop by the receiver/transmitter chip RTC is fed into the chip by signal lines RTIP and RRING connected to the tip and ring lines TTIP, TRING in front of the terminating resistors R, R. The received signals are fed into an element AGC of the chip RTC functioning as a subtractor.

Because the received far end signals are superimposed by echo signals generated by the transmission of signals by the line driver LD, it is necessary to remove the echo signal. This is accomplished by generating artificial or replica echo signals and subtract them from the received sum of far end signals and echo signals. The impedance replica comprises a replica transmit tip line RTTIP and a replica transmit ring line RTRING connected to a transformer replica, a bridged tap replica and a signal loop replica (cable replica).

The characteristics of the transformer T are reproduced by the transformer replica consisting of a primary winding resistance replica RW1, a secondary winding resistance replica RW2, a transformer main inductance replica LXF and a transformer stray inductance replica LS, wherein the transformer main inductance replica LXF is adjustable.

The bridged tap replica consists of an inductance replica LBT, a capacitance replica CBT and a resistance replica YBT in series. Each component of the bridged tap replica is adjustable.

The cable replica or transmission line replica consists of a plurality of RC-components RTL1, CTL1, RTL2, CTL2, RTL3, CTL3 and RTL4. The off chip RC-ladder is a replica for the input impedance of 15 ft AWG26 cable.

Further the circuit comprises terminating resistor replicas RT, RT.

The replica echo signal is fed via lines RRTI? and RRRING to the subtractor AGC. After subtracting the replica echo signal from the received signal of the real transmission, formed by the sum of the echo signal and the far end signal, the far end signal is provided.

The on chip part of the impedance replica consists of the transformer replica and bridged tap replica components wherein the adjustable parts of the transformer and bridged tap replicas can be set by software.

The embodiment shows a realization of the "Scaled Impedance Replica for Echo Attenuation in Digital Transmission systems" which is optimized to work at ANSI-ISDN test loops. If the bridged tap replica is disabled the impedance replica consisting of the remaining on and off chip components matches very well the impedance of ANSI-ISDN loops without bridged taps near to the line input. For loops with bridged taps near to the line input adequate adjusting of LBT, YBT and CBT provides good impedance matching also for this case. All integrated inductors are realized as gyrators. LXF can be trimmed to match varying main inductances of the transformer in the transmission path.

As summary the external compromise impedance replica has been replaced by a nearly fully integrated impedance replica taking each component of the transmission system detailed into account. With the integration of the most important impedance components it is possible to trim the impedance replica in a way that it can match various transmission loops providing very good echo attenuation.

## Claims

1. A receiver/transmitter chip (RTC) for a digital transmission system having a device for echo attenuation using an impedance replica of the transmission path, said chip comprising:
a transformer replica (RW1, RW2, LS, LXF) and a bridged tap replica (LBT, YBT, CBT) as on-chip components;
said bridged tap replica (LBT, YBT, CBT) including an inductance (LBT), a capacitance (CBT) and a resistance (YBT) connected between on-chip replica tap and ring lines (RTTIP, RTRING);
at least one of said inductance (LBT), said capacitance (CBT) and said resistance (YBT) being an adjustable part which can be set by software;
said replica tap and ring lines (RTTIP, RTRING) having first and second ends for connecting said transmission path and off-chip parts of said impedance replica, respectively;
an on-chip subtractor (AGC) having first inputs for receiving a replica echo signal over on-chip lines (RRTIP, RRRING) and having second inputs for receiving a signal of a transmission loop (L) of said transmission system.

2. Chip according to claim 1, **characterized in that** said inductance (LBT), said capacitance (CBT) and said resistance (YBT) are connected in series between said replica tap and ring lines (RTTIP, RTRING).

3. Chip according to claim 1 or 2, **characterized in that** the inductance (LBT), the capacitance (CBT) and the resistance (YBT) are adjustable.

4. Chip according to one of the preceding claims, **characterized in that** bridged tap replica (LBT, YBT, CBT) can be disabled.

5. Chip according to one of the preceding claims, **characterized in that** the transformer replica (RW1, RW2, LS, LXF) comprises a primary winding resistance replica (RW1), a secondary winding resistance replica (RW2), a transformer main inductance replica (LXF) and a transformer stray inductance replica (LS).

6. Chip according to claim 5, **characterized in that** the transformer main inductance replica (LXF) is adjustable.

7. Chip according to claim 5 or 6, **characterized in that** the transformer main inductance replica (LXF) is connected in parallel between said replica tap and ring lines (RTTIP, RTRING), whereas the primary winding resistance replica (RW1), the secondary winding resistance replica (RW2), and the transformer stray inductance replica (LS) are serial components in one of the replica tap and ring lines (RTTIP, RTRING).

8. Digital transmission system including a chip according to one of claims 1 to 7, wherein said transmission path is connected to said first ends over a terminating resistor replica (RT, RT) and a transmission line replica (RTL1, CTL1, RTL2, CTL2, RTL3, CTL3, RTL4) is connected to said second ends.

## Patentansprüche

1. Empfänger-/Senderchip (RTC) für ein digitales Übertragungssystem mit einer Einrichtung zur Echodämpfung, die eine Impedanznachbildung des Übertragungswegs verwendet, wobei der Chip folgendes umfaßt:
eine Übertragernachbildung (RW1, RW2, LS, LXF) und eine Brückenabzweigungsnachbildung (LBT, YBT, CBT) als Onchip-Komponenten;
wobei die Brückenabzweigungsnachbildung (LBT, YBT, CBT) eine Induktivität (LBT), eine Kapazität (CBT) und einen Widerstand (YBT) enthält, die zwischen Onchip-Nachbildungsabzweigungs- und -b-Leitung (RTTIP, RTRING) geschaltet sind;
wobei die Induktivität (LBT), die Kapazität (CBT) und/oder der Widerstand (YBT) ein einstellbarer Teil sind, der durch Software eingestellt werden kann;
wobei die Nachbildungsabzweigungs- und -b-Leitung (RTTIP, RTRING) ein erstes und ein zweites Ende zur Verbindung des Übertragungsweges bzw. von außerhalb des Chips angeordneten Teilen der Impedanznachbildung aufweisen;
einen Onchip-Subtrahierer (AGC) mit ersten Eingängen zum Empfangen einer Echosignalnachbildung über Onchip-Leitungen (RRTIP, RRRING) und mit zweiten Eingängen zum Empfangen eines Signals einer Übertragungsschleife (L) des Übertragungssystems.

2. Chip nach Anspruch 1, **dadurch gekennzeichnet, daß** die Induktivität (LBT), die Kapazität (CBT) und der Widerstand (YBT) zwischen der Nachbildungsabzweigungs- und -b-Leitung (RTTIP, RTRING) in Reihe geschaltet sind.

3. Chip nach Anspruch 1 oder 2, **dadurch gekennzeichnet, daß** die Induktivität (LBT), die Kapazität (CBT) und der Widerstand (YBT) einstellbar sind.

4. Chip nach einem der vorhergehenden Ansprüche, **dadurch gekennzeichnet, daß** die Brückenabzweigungsnachbildung (LBT, YBT, CBT) deaktiviert werden kann.

5. Chip nach einem der vorhergehenden Ansprüche, **dadurch gekennzeichnet, daß** daß die Übertragernachbildung (RW1, RW2, LS, LXF) eine Primärwicklungswiderstandsnachbildung (RW1), eine Sekundärwicklungswiderstandsnachbildung (RW2), eine Übertragerhauptinduktivitätsnachbildung (LXF) und eine Übertragerstreuinduktivitätsnachbildung (LS) umfaßt.

6. Chip nach Anspruch 5, **dadurch gekennzeichnet, daß** die Übertragerhauptinduktivitätsnachbildung (LXF) einstellbar ist.

7. Chip nach Anspruch 5 oder 6, **dadurch gekennzeichnet, daß** die Übertragerhauptinduktivitätsnachbildung (LXF) zwischen der Nachbildungs-Abzweigungs- und -b-Leitung (RTTIP, RTRING) parallel geschaltet ist, während die Primärwicklungswiderstandsnachbildung (RW1), die Sekundärwicklungswiderstandsnachbildung (RW2) und die Übertragerstreuinduktivitätsnachbildung (LS) serielle Komponenten in der Nachbildungsabzweigungs- oder -b-Leitung (RTTIP, RTRING) sind.

8. Digitales Übertragungssystem mit einem Chip nach einem der Ansprüche 1 bis 7, wobei der Übertragungsweg über eine Abschlußwiderstandsnachbildung (RT, RT) mit den ersten Enden verbunden ist und eine Übertragungsleitungsnachbildung (RTL1, CTL1, RTL2, CTL2, RTL3, CTL3, RTL4) mit den zweiten Enden verbunden ist.

## Revendications

1. Puce de récepteur / émetteur (RTC) pour un système de transmission numérique ayant un dispositif pour l'atténuation d'écho utilisant une réplique d'impédance du chemin de transmission, ladite puce comprenant :
une réplique de transformateur (RW1, RW2, LS, LXF) et une réplique de branchement en dérivation (LBT, YBT, CBT) en tant que composants intégrés à la puce ;
ladite réplique de branchement en dérivation (LBT, YBT, CBT) comprenant une inductance (LBT), une capacité (CBT) et une résistance (YBT) reliées entre les lignes d'appel et de branchement de réplique intégrées à la puce (RTTIP, RTRING) ;
au moins un élément parmi ladite inductance (LBT), ladite capacité (CBT) et ladite résistance (YBT) étant une partie réglable qui peut être réglée par logiciel :
lesdites lignes d'appel et de branchement de réplique (RTTIP, RTRING) ayant des premières et secondes extrémités pour respectivement relier ledit chemin de transmission et les parties en dehors de la puce de ladite réplique d'impédance :
un soustracteur intégré à la puce (AGC) ayant des premières entrées pour recevoir un signal d'écho de réplique sur des lignes intégrées à la puce (RRTIP, RRRING) et ayant des secondes entrées pour recevoir un signal d'une boucle de transmission (L) dudit système de transmission.

2. Puce selon la revendication 1, **caractérisée en ce que** ladite inductance (LBT), ladite capacité (CBT) et ladite résistance (YBT) sont reliées en série entre lesdites lignes d'appel et de branchement de réplique (RTTIP, RTRING).

3. Puce selon la revendication 1 ou 2,
**caractérisée en ce que** l'inductance (LBT), la capacité (CBT) et la résistance (YBT) sont réglables.

4. Puce selon l'une des revendications précédentes, **caractérisée en ce que** ladite réplique de branchement en dérivation (LBT, YBT, CBT) peut être mise hors service.

5. Puce selon l'une des revendications précédentes, **caractérisée en ce que** la réplique de transformateur (RW1, RW2, LS, LXF) comprend une réplique de résistance d'enroulement primaire (RW1), une réplique de résistance d'enroulement secondaire (RW2), une réplique d'inductance principale de transformateur (LXF) et une réplique d'inductance parasite de transformateur (LS).

6. Puce selon la revendication 5, **caractérisée en ce que** la réplique d'inductance principale de transformateur (LXF) est réglable.

7. Puce selon la revendication 5 ou 6, **caractérisée en ce que** la réplique d'inductance principale de transformateur (LXF) est reliée en parallèle entre lesdites lignes d'appel et de branchement de réplique (RTTIP, RTRING), tandis que la réplique de résistance d'enroulement primaire (RW1), la réplique de résistance d'enroulement secondaire (RW2), et la réplique d'inductance parasite de transformateur (LS) sont des composants en série dans l'une des lignes d'appel et de branchement de réplique (RTTIP, RTRING).

8. Système de transmission numérique comprenant une puce selon l'une des revendications 1 à 7, dans lequel ledit chemin de transmission est relié auxdites premières extrémités sur une réplique de résistance de terminaison (RT, RT), et une réplique de ligne de transmission (RTL1, CTL1, RTL2, CTL2, RTL3, CTL3, RTL4) est reliée auxdites secondes extrémités.
